# EUROPEAN PATENT SPECIFICATION

(11) **EP 3 075 950 B1**
(45) Date of publication and mention of the grant of the patent: **15.11.2017**
(21) Application number: 15184423.0
(22) Date of filing: 09.09.2015
(51) Int. Cl.: F01B 15/00, F04B 1/053, F04B 17/02, F04B 19/02, F16H 39/00, F01B 1/06

(54) **HYDRAULIC MACHINE AND RENEWABLE ENERGY TYPE POWER GENERATING APPARATUS**
HYDRAULIKMASCHINE UND VORRICHTUNG ZUR STROMERZEUGUNG AUS ERNEUERBAREN ENERGIEN
MACHINE HYDRAULIQUE ET APPAREIL DE GÉNÉRATION DE PUISSANCE DE TYPE À ÉNERGIE RENOUVELABLE

(30) Priority: 30.03.2015 JP 2015068478
(43) Date of publication of application: 05.10.2016
(73) Proprietor: MITSUBISHI HEAVY INDUSTRIES, LTD., Tokyo 108-8215 (JP)
(72) Inventor: YOSHIMI, Takeshi, Minato-ku, Tokyo 108-8215 (JP); NISHIDA, Hideaki, Minato-ku, Tokyo 108-8215 (JP); OCHIAI, Hiroyasu, Minato-ku, Tokyo 108-8215 (JP); ICHIRYU, Taku, Yokohama-shi, Kanagawa 220-8401 (JP); YASHIKI, Tadao, Yokohama-shi, Kanagawa 231-8715 (JP); LAVENDER, Jack, Midlothian, Lothian EH20 9TB (GB)
(74) Representative: Intès, Didier Gérard André

(56) References cited:
- EP-A1- 2 770 204
- WO-A1-2011/117904
- WO-A1-2014/087201
- DE-A1- 2 822 201
- DE-C1- 3 424 862

## Description

### TECHNICAL FIELD

The present disclosure relates to a hydraulic machine such as a hydraulic motor and a hydraulic pump, and a renewable-energy type power generating apparatus.

### BACKGROUND

Generally, a radial type hydraulic machine includes a plurality of pistons and cylinders arranged around a rotation shaft, and is widely used for a hydraulic transmission for a renewable-energy type power generating apparatus, for instance.

In some of such hydraulic machines, pistons and cylinders rock in accordance with rotation of a rotation shaft. For instance, Patent Document 1 describes a hydraulic machine including cylinders arranged around an eccentric cam and a plurality of pistons configured to reciprocate inside the cylinders. In such a hydraulic machine, a convex-shaped bearing surface formed on an end portion of each cylinder opposite to the eccentric cam engages with a concave-shaped bearing surface formed on a casing. When the pistons and the cylinders rock integrally in accordance with rotation of the eccentric cam, the convex-shaped bearing surfaces of the cylinders slide with the concave-shaped bearing surfaces on the casing side. In this way, rocking of the pistons and the cylinders is permitted.

### Citation List

### Patent Literature

Patent Document 1: EP2765310A

### SUMMARY

Like the hydraulic machine described in Patent Document 1, in a case where pistons and cylinders rock integrally, it is necessary to support the cylinders to the casing so as to be capable of rocking. That is, it is necessary to provide a support structure for cylinders such that the position of the cylinders in the radial direction of the hydraulic machine is maintained to be constant regardless of the reciprocating motion of the pistons while allowing rocking of the cylinders.

However, Patent Document 1 does not disclose a specific configuration for supporting the cylinders to the casing so as to be capable of rocking.

In view of the above issue, an object of at least one embodiment of the present invention is to provide a hydraulic machine capable of supporting cylinders to a stationary member so as to be capable of rocking, and a renewable-energy type power generating apparatus.
(1) A hydraulic machine according to at least one embodiment of the present invention includes: a rotation shaft; a cam configured to rotate with the rotation shaft; a plurality of cylinders disposed around the cam each of which includes a distal end portion disposed on an outer side in a radial direction of the rotation shaft, a part of the distal end portion being formed by a first curved surface; a plurality of pistons disposed around the cam so that end portions of the pistons at an inner side in the radial direction contact a cam surface of the cam, the plurality of pistons each being configured to reciprocate in corresponding one of the plurality of cylinders along a direction of a center axis of the cylinder in accordance with rotation of the cam; a stationary member disposed on an outer side of the plurality of cylinders in the radial direction, the stationary member including sockets having second curved surfaces which are engageable with the first curved surfaces of the distal end portions of the cylinders; and at least one elastic member for biasing the plurality of cylinders outward in the radial direction so as to force the first curved surfaces of the cylinders against the second curved surfaces of the sockets. The first curved surfaces of the respective cylinders engage with the second curved surfaces of the sockets so that rocking of each of the cylinders is permitted at least in a plane perpendicular to a rotational axis of the rotation shaft.
   The above hydraulic machine (1) includes at least one elastic member for biasing the cylinders outward in the radial direction of the rotation shaft so as to force the first curved surfaces of the cylinders against the second curved surfaces of the sockets. In this way, it is possible to retain the position of the cylinders in the radial direction of the rotation shaft regardless of the reciprocating motion of the pistons in the cylinders. Further, since the first curved surfaces of the cylinders are forced against the second curved surfaces of the sockets by the at least one elastic member, it is possible to support the cylinders to the stationary member without interfering with rocking of the cylinders.
(2) In some embodiments, in the above configuration (1), the at least one elastic member includes a pair of elastic members disposed on opposite sides of the plurality of cylinders in a direction of the rotational axis.
   The cylinders rock at least in a plane perpendicular to the rotational axis of the rotation shaft. Thus, with the pair of elastic members disposed on either side of each cylinder in the direction of the rotational axis that is different from the rocking direction, it is possible to prevent the pair of elastic members from interfering with rocking of the cylinders.
   Here, the rocking direction of the cylinders is not limited to the direction in a plane perpendicular to the rotational axis of the rotation shaft, and may include other directions.
(3) In some embodiments, in the above configuration (1) or (2), each of the cylinders includes a biasing-force receiving surface disposed so as to face inward in the radial direction and configured to receive a biasing force of the at least one elastic member. The stationary member includes a support surface disposed on an inner side of the biasing-force receiving surface in the radial direction so as to face the biasing-force receiving surface. The hydraulic machine further includes a rotation permitting portion for permitting rotation of the biasing-force receiving surface with respect to the support surface about an axis parallel to the rotational axis, the rotation permitting portion being disposed between the biasing-force receiving surface of each of the cylinders and the support surface of the stationary member.
   When the cylinders rock in a plane perpendicular to the rotational axis of the rotation shaft, the angle of the biasing-force receiving surface of each cylinder with respect to the support surface of the stationary member varies in accordance with the rocking of the cylinders. Thus, in the above configuration (3), the rotation permitting portion for permitting rotation of the biasing-force receiving surface with respect to the support surface about an axis parallel to the rotational axis is disposed between the biasing-force receiving surface of the cylinder and the support surface of the stationary member, which makes it possible to permit a relative change of the angle between the biasing-force receiving surface and the support surface caused by the rocking of the cylinder. Thus, it is possible to transmit the biasing force of the elastic member supported to the stationary member via the support surface effectively toward the cylinder via the biasing-force receiving surface.
(4) In some embodiments, in the above configuration (3), the rotation permitting portion includes an engagement surface which is engageable with a concave groove disposed on at least one of the biasing-force receiving surface or the support surface, and which has a curved cross section along a plane perpendicular to the rotational axis.
   With the above configuration (4), when the cylinder rocks, the engagement surface slides along the surface of the concave groove, which makes it possible to permit rotation of the biasing-force receiving surface with respect to the support surface caused by rocking of the cylinder smoothly.
(5) In some embodiments, in the above configuration (3) or (4), the rotation permitting portion includes a ball which is engageable with a concave groove disposed on at least one of the biasing-force receiving surface or the support surface.
   With the above configuration (5), it is possible to permit rotation of the biasing-force receiving surface with respect to the support surface caused by rocking of the cylinder with a simplified configuration. Further, if the ball of the rotation permitting portion is configured to be replaceable, maintenance and repair can be easily performed in response to deterioration of a component due to sliding.
(6) In one embodiment, in the above configurations (3) to (5), each of the cylinders includes a protruding portion disposed so as to protrude outward from an outer circumferential surface of the cylinder, the protruding portion including the biasing-force receiving surface. The at least one elastic member is a coil spring disposed between the biasing-force receiving surface of the protruding portion and the support surface of the stationary member. The hydraulic machine further includes a pin including a shaft portion inserted through the coil spring and a flange portion for receiving a biasing force of the coil spring. The rotation permitting portion includes a ball which is engageable with a first concave groove formed on the biasing-force receiving surface of the protruding portion and a second concave groove formed on a surface of the flange portion which is opposite to the coil spring.
   With the above configuration (6), the biasing force of the coil spring received by the flange portion of the pin is transmitted toward the cylinder via the ball serving as the rotation permitting portion. The ball is disposed between the first concave groove formed on the biasing-force receiving surface and the second concave groove formed on the flange portion so as to engage with the first and second concave grooves. With this configuration, it is possible to permit the relative change in the angle between the first concave groove of the biasing-force receiving surface and the second concave-groove of the flange portion smoothly with the ball. Further, since the coil spring is inserted onto the shaft portion of the pin, it is possible to determine the position of the coil spring with the shaft portion.
(7) In another embodiment, in the above configurations (3) to (5), each of the cylinders includes a protruding portion disposed so as to protrude outward from an outer circumferential surface of the cylinder, the protruding portion including the biasing-force receiving surface. The at least one elastic member is a coil spring disposed between the biasing-force receiving surface of the protruding portion and the support surface of the stationary member. The rotation permitting portion includes a shaft portion inserted through the coil spring and an engagement portion disposed integrally with the shaft portion on an end portion of the shaft portion at an opposite side from the support surface. The engagement portion of the rotation permitting portion includes an engagement surface which is engageable with a concave groove formed on the biasing-force receiving surface of the protruding portion and which has a curved cross section along a plane perpendicular to the rotational axis.
   With the above configuration (7), the biasing force of the coil spring is transmitted toward the cylinder via the engagement portion of the rotation permitting portion. The engagement surface of the engagement portion has a curved cross section and is engageable with the concave groove formed on the biasing-force receiving surface. Thus, slide of the engagement surface of the engagement portion with respect to the concave groove of the biasing-force receiving surface makes it possible to permit a relative change in the angle between the biasing-force receiving surface and the engagement surface smoothly. Further, in this configuration, the contact section between the concave groove and the engagement surface is the only sliding section, which makes it possible to reduce a risk of abrasion or galling, for instance, which may occur from sliding. Furthermore, since the coil spring is inserted onto the shaft portion of the rotation permitting portion, it is possible to determine the position of the coil spring with the shaft portion.
   Here, the engagement portion may have a spherical shape or a column shape. In a case where the engagement portion has a spherical shape, it is possible to also permit rocking of the cylinder in a direction other than the rocking direction in a plane perpendicular to the rotational axis of the rotation shaft. Alternatively, in a case where the engagement portion has a column shape, the contact between the concave groove of the biasing-force receiving surface and the engagement surface of the engagement portion is line contact, which reduces a contact surface pressure and improves abrasion resistance.
(8) In some embodiments, in the above configurations (1) to (7), the second curved surface of each of the sockets has a curvature radius larger than that of the first curved surface of each of the cylinders.
   For instance, if the first curved surface of the cylinder is formed to have the same curvature radius as that of the second curved surface of the socket, the first curved surface of the cylinder might have a larger curvature radius than the second curved surface of the socket due to the tolerance. In this case, the cylinder and the socket would contact each other at both of the inner side (contact at the inner side in the radial direction of the cylinder) and the outer side (contact at the outer side in the radial direction of the cylinder), which makes a contact load unstable.
   In view of this, in the above configuration (8), the second curved surface of the socket is configured to have a larger curvature radius than the first curved surface of the cylinder. In this way, it is possible to prevent the cylinder and the socket from contacting each other at both of the inner side and the outer side, and to stabilize the contact load between the cylinder and the socket, which enables the cylinder to rock smoothly. Further, gaps are formed on either side of the contact section between the first curved surface of the cylinder and the second curved surface of the socket. Thus, the working oil is introduced more easily through this gap, which makes it possible to improve the sliding performance between the first curved surface and the second curved surface.
(9) In one embodiment, in the above configuration (8), each of the sockets includes a tapered surface disposed on an inner side of corresponding one of the second curved surfaces in a radial direction of corresponding one of the cylinders. The tapered surface extends on a tangent line of the second curved surface at a boundary between the second curved surface and the tapered surface, or in a region on a socket side of the tangent line.
   With the above configuration (9), the tapered surface of the socket extends on a tangent line of the second curved surface at a boundary between the second curved surface and the tapered surface, or in a region on a socket side of the tangent line, which makes it possible to stabilize the contact position of the first curved surface of the cylinder with respect to the second curved surface of the socket.
(10) In some embodiments, in the above configurations (1) to (9), each of the pistons includes: a cylindrical portion including an opening disposed on an outer side in the radial direction; a lid portion which closes the opening of the cylindrical portion; and a filling material which fills an interior space surrounded by the cylindrical portion and the lid portion.
(11) In some embodiments, in the above configuration (10), a specific gravity of the filling material is not less than 0.7 times and not more than 1.3 times a specific gravity of working oil used in the hydraulic machine.
   For instance, if the interior space of the piston is hollow, unnecessary work would be caused when the piston is pressed down toward a bottom dead center. In view of this, in the above configuration (10) or (11), the interior space of the piston is filled with the filler material so that the capacity of the working chamber is reduced as compared to a case where the interior space of the piston is hollow, which makes it possible to avoid occurrence of unnecessary work when the piston is pressed down toward the bottom dead center.
(12) In some embodiments, in the above configurations (1) to (11), the plurality of cylinders includes a group of cylinders arranged in a circumferential direction of the hydraulic machine to form a cylinder row in the circumferential direction. The at least one elastic member includes a plurality of elastic members corresponding to the respective cylinders belonging to the group of cylinders. The hydraulic machine further includes an elastic-member holder of an annular shape disposed around the cam surface and configured to hold the plurality of elastic members.
   With the above configuration (12), since the elastic-member holder of an annular shape holds the plurality of elastic members, it is possible to reduce the number of components and to reduce the operation time in assembling.
(13) In some embodiments, in the above configurations (1) to (12), the plurality of pistons includes a group of pistons arranged in a circumferential direction of the hydraulic machine to form a piston row in the circumferential direction. The hydraulic machine further includes a retention ring disposed around the cam surface and configured to engage with the plurality of pistons belonging to the group of pistons so as to hold the pistons from an outer side in the radial direction.
   With the above configuration (13), since the retention ring holds the plurality of pistons toward the rotation shaft, it is possible to maintain the end portions of the pistons to be in contact with the cam surface of the cam.
(14) A renewable-energy type power generating apparatus according to one embodiment includes: a rotor configured to be rotated by renewable energy; a hydraulic pump configured to be driven by the rotor; and a hydraulic motor configured to be driven by pressurized oil produced by the hydraulic pump; and a generator configured to be driven by the hydraulic motor. At least one of the hydraulic pump or the hydraulic motor is the hydraulic machine according to any one the above (1) to (13).

According to at least one embodiment of the present invention, it is possible to retain the position of the cylinders in the radial direction of the rotation shaft without interfering with rocking of the cylinders.

### BRIEF DESCRIPTION OF DRAWINGS

FIG. 1 is a schematic configuration diagram of a wind turbine generator according to some embodiments.
FIG. 2 is a configuration diagram of a hydraulic motor according to some embodiments.
FIG. 3A is a diagram of pistons and cylinders with a peripheral structure thereof according to one embodiment (taken in the direction of arrow A of FIG. 2).
FIG. 3B is a diagram of pistons and cylinders with a peripheral structure thereof according to one embodiment (taken in the direction of arrow B of FIG. 2).
FIG. 4 is a cross-sectional view of an elastic member and a peripheral structure thereof according to one embodiment.
FIG. 5A is a cross-sectional view of an elastic member and a peripheral structure thereof according to another embodiment.
FIG. 5B is a perspective view of a rotation permitting portion illustrated in FIG. 5A.
FIG. 6 is an enlarged cross-sectional view of a contact section between a socket and a cylinder according to one embodiment.
FIG. 7 is a cross-sectional view of a configuration example of a piston according to one embodiment.
FIG. 8 is a schematic perspective view of elastic-member holders according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

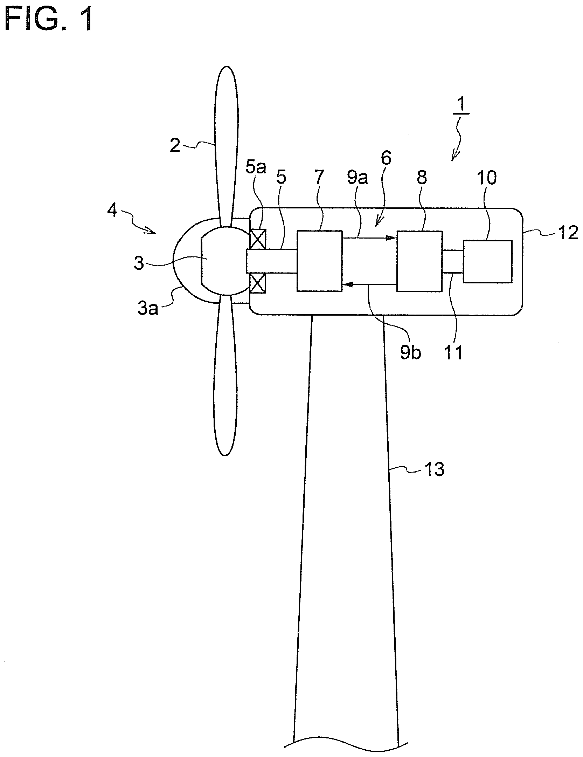

Firstly, with reference to FIG. 1, a wind turbine generator 1 will be described as an example of a renewable-energy type power generating apparatus according to the present embodiment. FIG. 1 is a schematic configuration diagram of a wind turbine generator 1 according to some embodiments.

As illustrated in FIG. 1, the wind turbine generator 1 according to some embodiments is configured to be rotated by wind energy. The wind turbine generator 1 includes a rotor 4 including at least one blade 2 and a hub 3, a hydraulic pump 7 configured to be driven by the rotor 4, a hydraulic motor 8 configured to be driven by pressurized oil produced by the hydraulic pump 7, and a generator 10 configured to be driven by the hydraulic motor 8.

Specifically, a plurality of blades 2 is mounted to the hub 3 in a radial fashion, and a main shaft 5 is connected to the hub 3. The hub 3 may be covered by a hub cover 3a. The main shaft 5 is supported rotatably to the nacelle 12 by the main bearing 5a. A drivetrain 6 including the hydraulic pump 7 and the hydraulic motor 8 is disposed between the main shaft 5 and the generator 10. The nacelle 12 is supported to an upper end of the tower 13 disposed on a base on ocean or on land so as to be yaw rotatable. In one configuration example, the main shaft 5, the drivetrain 6 and the generator 10 are disposed in the interior space of the nacelle 12. In another configuration example, at least one unit in the drivetrain 6 or the generator 10 is disposed outside the nacelle 12, such as the interior space of the tower 13.

In one embodiment, the drivetrain 6 includes the hydraulic pump 7 mounted to the main shaft 5 and the hydraulic motor 8 connected to the hydraulic pump 7 via a high-pressure oil line 9a and a low-pressure oil line 9b. The hydraulic pump 7 is driven by the main shaft 5 to increase the pressure of working oil, thereby generating high-pressure working oil (pressurized oil). An outlet of the hydraulic pump 7 is connected to an inlet of the hydraulic motor 8 via the high-pressure oil line 9a. With this configuration, the pressurized oil produced by the hydraulic pump 7 is supplied to the hydraulic motor 8 via the high-pressure oil line 9a to drive the hydraulic motor 8. The low-pressure working oil having performed work in the hydraulic motor 8 is returned again to the hydraulic pump 7 via the low-pressure oil line 9b disposed between an outlet of the hydraulic motor 8 and an inlet of the hydraulic pump 7. Further, a rotation shaft (output shaft) 11 of the hydraulic motor 8 is connected to an input shaft of the generator 10, so that rotation of the hydraulic motor 8 is inputted into the generator 10 via the rotation shaft 11. With regard to the drivetrain 6, the number of the hydraulic pump 7, the hydraulic motor 8 or the generator 10 is not particularly limited, and it is only necessary to provide at least one for each.

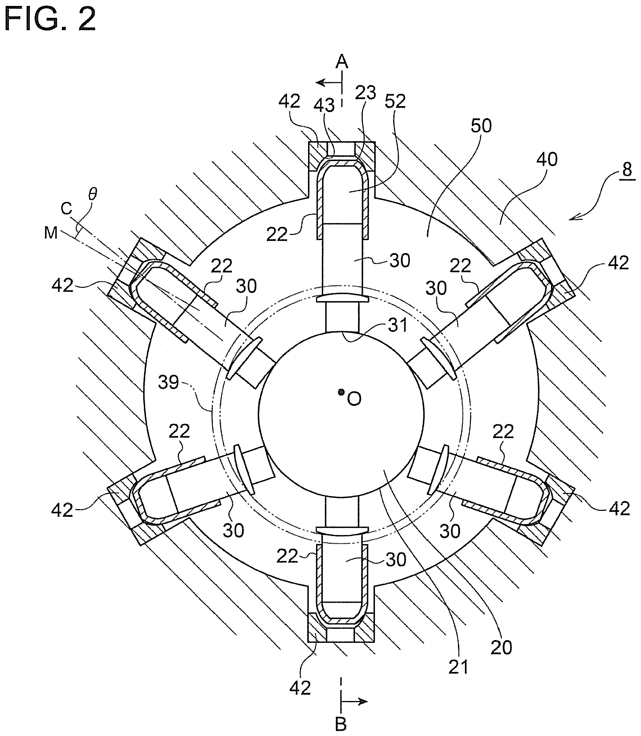

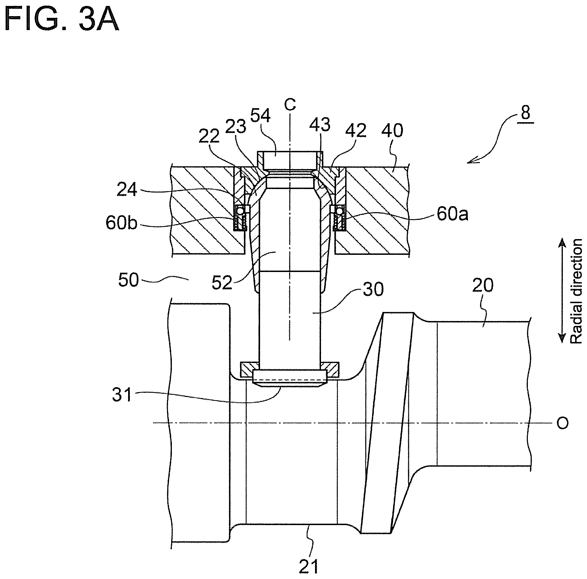

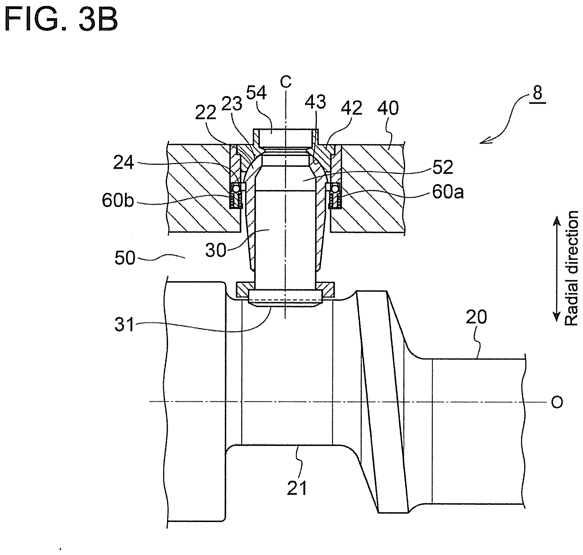

Next, with reference to FIGs. 2, 3A and 3B, the hydraulic machine according to the present embodiment will be described using the hydraulic motor 8 as an example. However, the hydraulic machine according to the present embodiment is not limited to the hydraulic motor 8, and may be other hydraulic machines such as the hydraulic pump 7.

FIG. 2 is a configuration diagram of a hydraulic motor 8 according to some embodiments. FIG. 3A is a diagram of pistons 30 and cylinders 22 with a peripheral structure thereof according to one embodiment (taken in the direction of arrow A of FIG. 2). FIG. 3B is a diagram of pistons 30 and cylinders 22 with a peripheral structure thereof according to one embodiment (taken in the direction of arrow B of FIG. 2).

The hydraulic motor 8 according to one embodiment includes the rotation shaft 11 (see FIG. 1), an eccentric cam (cam shaft) 20 configured to rotate along with the rotation shaft 11, a plurality of cylinders 22 disposed around the eccentric cam 20, and a plurality of pistons 30 configured to reciprocate inside the cylinders 22 along the direction of the center axis C of corresponding one of the cylinders 22 in accordance with the rotation of the eccentric cam 20. The cylinders 22 and the pistons 30 form working chambers 52 into which the working oil flows.

The eccentric cam 20 is housed in a cam chamber 50 filled with lubricant oil, and configured to rotate about the rotational axis O of the rotation shaft 11 (FIG. 1). The eccentric cam 20 includes a cam surface 21 that is eccentric with respect to the rotational axis O, so that a cross section (that is perpendicular to the rotational axis O) of the eccentric cam 20 has a precise circle shape that is eccentric from the rotational axis O. Further, in a case where cylinder groups each including the plurality of cylinders 22 disposed around the eccentric cam 20 are disposed along the direction of the rotational axis O in rows, one of the cam surfaces 21 is eccentric in a direction different from that of an adjacent cam surface, as illustrated in FIGs. 3A and 3B.

The cam chamber 50 is defined by the housing 40. The inner circumferential surface of the housing 40 has a cylindrical shape centered at the rotational axis O. A plurality of sockets 42 is mounted to the inner circumferential surface side of the housing 40 at regular intervals along the circumferential direction. In the present embodiment, a member including the housing 40 and the sockets 42 is collectively referred to as a stationary member.

The plurality of cylinders 22 each include a distal end portion at the outer side in the radial direction of the rotation shaft 11 (see FIG. 1) and a root end portion at the inner side in the radial direction. At least a part of the distal end portion is formed by the first curved surface 23. In the example illustrated in the drawing, an opening is formed along the center axis C of each cylinder 22. The opening connects the working chamber 52 to a working-oil flow channel 54 that communicates with the high-pressure oil line 9a or the low-pressure oil line 9b (see FIG. 1) via a valve. The first curved surface 23 having an annular shape is formed around this opening. The first curved surface 23 is formed by a curved surface that projects outward in the radial direction so that the curvature center is positioned on a side of the first curved surface 23 closer to the center axis C and to the rotational axis O. The root end portion has an opening into which the piston 30 is to be inserted. Further, the cylinder 22 may include a protruding portion 24 that protrudes outward from the outer circumferential surface of the cylinder 22.

Each of the plurality of sockets 42 is disposed outside of the cylinder 22 in the radial direction, and incudes the second curved surface 43 that engages with the first curved surface 23 of the distal end portion of corresponding one of the cylinders 22. In the illustrated example, working-oil flow channels 54 are each formed along the center axis M of corresponding one of the sockets 42, and the second curved surface 43 having an annular shape is formed around the working-oil flow channel 54. The second curved surface 43 is formed by a curved surface projecting outward in the radial direction so that the curvature center is positioned on a side of the second curved surface 43 that is closer to the center axis M and to the rotational axis O. Although the first curved surface 23 and the second curved surface 43 are described with reference to a cross section taken along the direction of the rotational axis O in FIGs. 3A and 3B, the first curved surface 23 and the second curved surface 43 are actually disposed in a plane perpendicular to the rotational axis O as illustrated in FIG. 2. It will be understood that the first curved surface 23 and the second curved surface 43 may also be disposed in a cross section taken along the direction of the rotational axis O as illustrated in FIGs. 3A and 3B.

The plurality of pistons 30 is each disposed around the eccentric cam 20 so that an end portion 31 on the inner side in the radial direction contacts the cam surface 21 of the eccentric cam 20. Further, the plurality of pistons 30 is disposed in a radial fashion with respect to the cam surface 21 of the eccentric cam 20, and a retention ring (not illustrated), for instance, maintains the end portions 31 of the pistons 30 to be in contact with the cam surface 21 in spite of rotation of the eccentric cam 20. The end portions 31 of the pistons 30 have a curved surface corresponding to the cam surface 21. For instance, the curved surface of each end portion 31 has a smaller curvature than the curved surface of the cam surface 21.

Since the end portions 31 of the pistons 30 are curved in accordance with the cam surface 21, the pistons 30 rock with the cylinders 22 in a plane perpendicular to the rotational axis O when the eccentric cam 20 rotates. Specifically, an angle θ formed between the center axis C of each cylinder 22 and the center axis M of corresponding one of the sockets 42 varies in accordance with rotation of the eccentric cam 20.

The rocking of the cylinders 22 and the pistons 30 is permitted by slide of the first curved surfaces 23 of the cylinders 22 with respect to the second curved surfaces 43 of the sockets 42.

Further, the hydraulic motor 8 according to the first embodiment further includes at least one elastic member 60 (60a, 60b) for biasing one of the cylinders 22 outward in the radial direction so that the first curved surface 23 of the cylinder 22 is forced against the second curved surface 43 of the socket 42. The elastic member 60 (60a, 60b) is configured to apply a biasing force in a direction for forcing the first curved surface 23 of the cylinder 22 against the second curved surface 43 of the socket 42. The elastic member 60 (60a, 60b) may be a coil spring that expands and contracts along the center axis C of the cylinder 22. Here, the elastic member 60 (60a, 60b) is not limited to a coil spring, and may be a spring of another type such as a plate spring, rubber, or a cushion material.

With the above configuration, it is possible to retain the position of the cylinder 22 in the radial direction regardless of the reciprocating motion of the piston 30 in the cylinder 22. Further, since the first curved surface 23 of the cylinder 22 is forced against the second curved surface 43 of the socket 42 by the at least one elastic member 60 (60a, 60b), it is possible to support the cylinder 22 to the stationary member without interfering with rocking of the cylinder 22 in a plane perpendicular to the rotational axis O. Here, the rocking direction of the cylinder 22 is not limited to a direction in the plane perpendicular to the rotational axis O, and may include other directions.

The at least one elastic member 60 may include a pair of elastic members 60a, 60b disposed on either side of the cylinder 22 in the direction of the rotational axis O.

The cylinder 22 rocks at least in a plane perpendicular to the rotational axis O. Thus, with the pair of elastic members 60a, 60b disposed on either side of the cylinder 22 in the direction of the rotational axis O varied from the rocking direction, it is possible to prevent the pair of elastic members 60a, 60b from interfering with rocking of the cylinder 22.

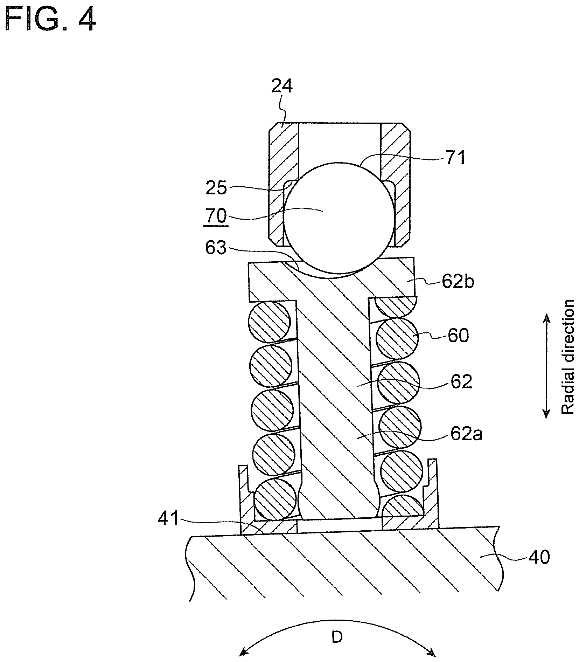

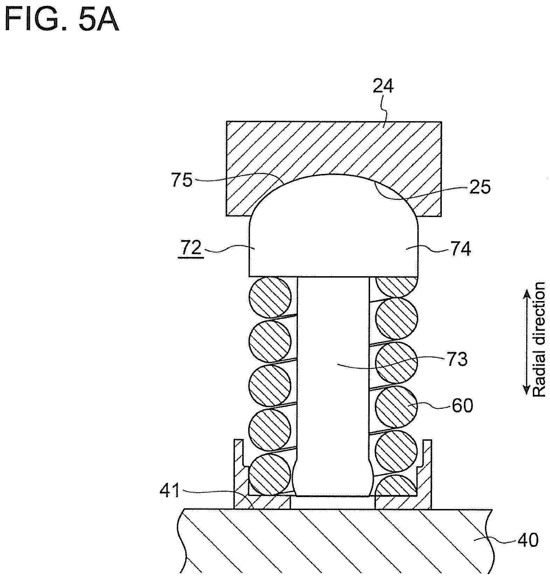

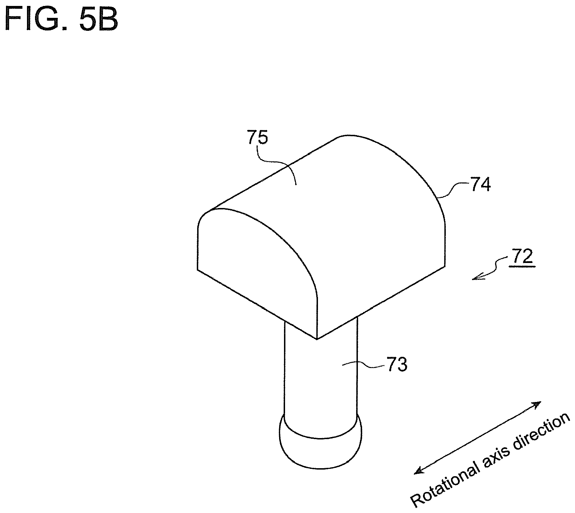

Here, with reference to FIGs. 4, 5A, and 5B, the specific configuration of the elastic member 60 and its peripheral structure will be described.

FIG. 4 is a cross-sectional view of an elastic member 60 and a peripheral structure thereof according to one embodiment. FIG. 5A is a cross-sectional view of an elastic member and a peripheral structure thereof according to another embodiment. FIG. 5B is a perspective view of the rotation permitting portion illustrated in FIG. 5A. Here, FIGs. 4 and 5A are each a cross-sectional view taken in a direction perpendicular to the rotational axis O.

First, configuration that is common to the respective embodiments illustrated in FIGs. 4A, 5A and 5B will be described.

In the above embodiments, the elastic member 60 is a coil spring. A protruding portions 24 is disposed so as to protrude outward from the outer circumferential surface of the cylinder 22 (see FIGs. 3A and 3B), and includes a biasing-force receiving surface 25 disposed so as to face inward in the radial direction and configured to receive a biasing force of the elastic member 60. The stationary member includes a support surface 41 disposed on the inner side of the biasing-force receiving surface 25 in the radial direction so as to face the biasing-force receiving surface 25. In FIG. 4, the support surface 41 is disposed on the housing 40. In FIG. 5A, the support surface 41 is disposed on the housing 40.

In one embodiment, the hydraulic motor 8 (see FIGs. 3A and 3B) further includes a rotation permitting portion 70, 72 for permitting rotation of the biasing-force receiving surface 25 with respect to the support surface 41 about an axis parallel to the rotational axis O, disposed between the biasing-force receiving surface 25 of the protruding portion 24 and the support surface 41 of the stationary member.

When the cylinder 22 (see FIG. 2) rocks in a plane perpendicular to the rotational axis O, the angle of the biasing-force receiving surface 25 of the protruding portion 24 with respect to the support surface 41 of the stationary member varies in accordance with the rocking of the cylinder 22. Thus, as described above, the rotation permitting portion 70, 72 for permitting rotation of the biasing-force receiving surface 25 with respect to the support surface 41 about an axis parallel to the rotational axis O is disposed between the biasing-force receiving surface 25 of the protruding portion 24 and the support surface 41 of the stationary member, which makes it possible to permit a relative change of the angle between the biasing-force receiving surface 25 and the support surface 41 caused by the rocking of the cylinder 22. Thus, it is possible to transmit the biasing force of the elastic member 60 supported to the stationary member via the support surface 41 effectively toward the cylinder 22 via the biasing-force receiving surface 25.

Further, the rotation permitting portion 70, 72 is engageable with a concave groove disposed on at least one of the biasing-force receiving surface 25 or the support surface 41, and includes an engagement surface 71, 75 that has a curved cross section along a plane perpendicular to the rotational axis O. While the concave groove is disposed on the biasing-force receiving surface 25 in the example illustrated in the drawing, the concave groove may be disposed on the support surface 41. In a case where the concave groove is disposed on the biasing-force receiving surface 25, the concave groove of the biasing-force receiving surface 25 includes a curved surface that has a curvature center on a side closer to the support surface 41. In other words, the concave groove of the biasing-force receiving surface 25 is formed by a curved surface that protrudes outward in the radial direction. Similarly, the engagement surface 71, 75 is formed by a curved surface that has a curvature center on a side closer to the support surface 41. In other words, the engagement surface 71, 75 is formed by a curved surface that protrudes outward in the radial direction.

With the above configuration, when the cylinder 22 (see FIG. 2) rocks, the engagement surface 71, 75 slides along the surface of the concave groove, which makes it possible to permit rotation of the biasing-force receiving surface 25 with respect to the support surface 41 caused by rocking of the cylinder 22 smoothly.

In the embodiments illustrated in FIGs. 4A, 5A, and 5B, the rotation permitting portion 70 includes a ball that is engageable with the concave groove disposed on the biasing-force receiving surface 25. Alternatively, though not illustrated, the rotation permitting portion 70 may include a ball that is engageable with the concave groove disposed on the support surface 41.

With the above configuration, it is possible to permit rotation of the biasing-force receiving surface 25 with respect to the support surface 41 caused by rocking of the cylinder 22 (see FIG. 2) with a simplified configuration. Further, with the ball of the rotation permitting portion 70 being configured to be replaceable, maintenance and repair can be easily performed in response to deterioration of a component due to sliding.

Next, the specific configuration of each embodiment will be described.

As illustrated in FIG. 4, in one embodiment, the elastic member 60 is a coil spring disposed between the biasing-force receiving surface 25 of the protruding portion 24 and the support surface 41 of the housing 40. The hydraulic motor 8 (see FIG. 2) further includes a pin 62 including a shaft portion 62a inserted through the coil spring 60 and a flange portion 62b for receiving the biasing force of the coil spring 60.

Specifically, the coil spring 60 is supported firmly to the support surface 41 at one end, and is in contact with the flange portion 62b at the other end. The shaft portion 62a is movable in the radial direction in accordance with expansion and contraction of the coil spring 60. Further, the first concave groove is formed on the biasing-force receiving surface 25 of the protruding portion 24. On the other hand, the second concave groove 63 is formed on a surface opposite to the coil spring 60 of the flange portion 62b. A ball is disposed as the rotation permitting portion 70 between the first concave groove formed on the biasing-force receiving surface 25 and the second concave groove 63 formed on the flange portion 62b. The engagement surface 71 of the ball 70 engages slidably with the first concave groove formed on the biasing-force receiving surface 25. A surface of the ball 70 opposite to the engagement surface 71 engages slidably with the second concave groove 63 formed on the flange portion 62b.

With the above configuration, the biasing force of the coil spring 60 received by the flange portion 62b of the pin 62 is transmitted toward the cylinder 22 (see FIG. 2) via the ball 70 serving as the rotation permitting portion. The ball 70 is disposed between the first concave groove formed on the biasing-force receiving surface 25 and the second concave groove 63 formed on the flange portion 62b so as to engage with the first and second concave grooves. With this configuration, it is possible to permit the relative change of the angle between the first concave groove of the biasing-force receiving surface 25 and the second concave-groove 63 of the flange portion 62b in the rocking direction D of the cylinder 22 smoothly with the ball 70. Further, since the coil spring 60 is inserted onto the shaft portion 62a of the pin 62, it is possible to determine the position of the coil spring 60 with the shaft portion 62a.

As illustrated in FIGs. 5A and 5B, in another embodiment, the elastic member 60 is a coil spring disposed between the biasing-force receiving surface 25 of the protruding portion 24 and the support surface 41 of the housing 40. The rotation permitting portion 72 includes a shaft portion 73 inserted through the coil spring 60 and an engagement portion 74 disposed on an end of the shaft portion 73 opposite to the support surface 41 integrally with the shaft portion 73. The engagement portion 74 includes an engagement surface 75 that is engageable with the concave groove formed on the biasing-force receiving surface 25 of the protruding portion 24, and that has a curved cross section along a plane perpendicular to the rotational axis O (see FIG. 2).

Specifically, the coil spring 60 is supported firmly to the support surface 41 at one end, and is in contact with the engagement portion 74 at the other end. The surface of the engagement portion 74 that the coil spring 60 contacts may be a flat surface. The rotation permitting portion 72 is movable in the radial direction in accordance with expansion and contraction of the coil spring 60. Further, a concave groove is formed on the biasing-force receiving surface 25 of the protruding portion 24. Still further, the engagement surface 75 formed on the engagement portion 74 engages with the biasing-force receiving surface 25 slidably.

With the above configuration, the biasing force of the coil spring 60 is transmitted toward the cylinder 22 (see FIG. 2) via the engagement portion 74 of the rotation permitting portion 72. The engagement surface 75 of the engagement portion 74 has a curved cross section and is engageable with the concave groove formed on the biasing-force receiving surface 25. Thus, slide of the engagement surface 75 of the engagement portion 74 with respect to the concave groove of the biasing-force receiving surface 25 makes it possible to permit a relative change of the angle between the biasing-force receiving surface 25 and the engagement surface 75 smoothly. Further, in this configuration, the contact section of the concave groove and the engagement surface 75 is the only sliding section, which makes it possible to reduce a risk of abrasion or galling, for instance, which may occur from slide. Furthermore, since the coil spring 60 is inserted onto the shaft portion 73 of the rotation permitting portion 72, it is possible to determine the position of the coil spring 60 with the shaft portion 73.

With this configuration, the engagement portion 74 may have a spherical (semispherical) shape. In this case, it is possible to also permit rocking of the cylinder 22 (see FIG. 2) in a direction different from the rocking direction D in a plane perpendicular to the rotational axis O. Alternatively, as illustrated in FIG. 5B, the engagement portion 74 may have a column shape that has an axis parallel to the rotational axis O. In this case, the contact between the concave groove of the biasing-force receiving surface 25 and the engagement surface 75 of the engagement portion 74 is line contact, which reduces a contact surface pressure and improves abrasion resistance.

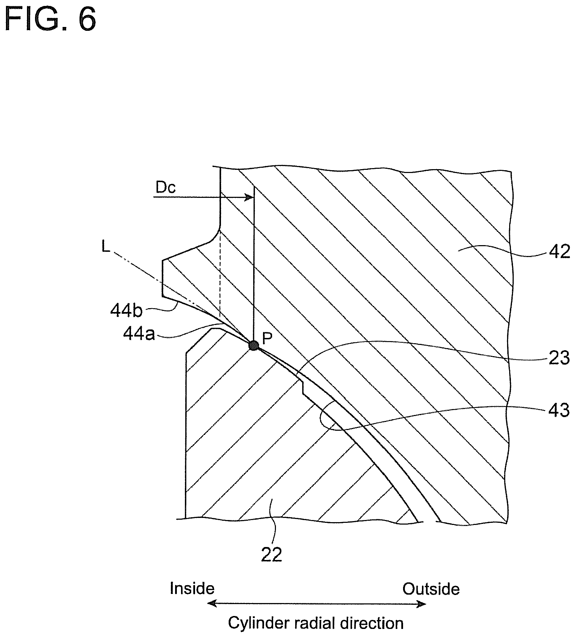

FIG. 6 is an enlarged cross-sectional view of a contact section between one of the sockets 42 and corresponding one of the cylinders 22 according to one embodiment.

In one embodiment, the second curved surface 43 of the socket 42 has a larger curvature radius than the first curved surface 23 of the cylinder 22.

In a case where the first curved surface 23 of the cylinder 22 is formed to have the same curvature radius as that of the second curved surface 43 of the socket 42, for instance, the first curved surface 23 of the cylinder 22 might have a larger curvature radius than the second curved surface 43 of the socket 42 due to the tolerance. In this case, the cylinder 22 and the socket 42 would contact each other at both of the inner side (contact at the inner side in the radial direction of the cylinder) and the outer side (contact at the outer side in the radial direction of the cylinder), which makes a contact load unstable.

In view of this, the second curved surface 43 of the socket 42 is configured to have a larger curvature radius than the first curved surface 23 of the cylinder 22. In this way, it is possible to prevent the cylinder 22 and the socket 42 from contacting each other at both of the inner side and the outer side, and to stabilize the contact load between the cylinder 22 and the socket 42, which enables the cylinder 22 to rock smoothly. Further, gaps are formed on either side of the contact section between the first curved surface 23 of the cylinder 22 and the second curved surface 43 of the socket 42. Thus, the working oil is introduced more easily through this gap, which makes it possible to improve the sliding performance between the first curved surface 23 and the second curved surface 43.

Further, in one embodiment, the socket 42 includes a tapered surface 44a that is positioned on the inner side (the left side in the drawing), in the radial direction of the cylinder, of the second curved surface 43 contacting the first curved surface 23. This tapered surface 44a extends on a tangent line L of the second curved surface 43 at a boundary P between the second curved surface 43 and the tapered surface 44a, or in a region on a socket 42 side of the tangent line L, which is the opposite side of the tangent line L from the cylinder 22. In the example illustrated in the drawing, the tapered surface 44a is formed along the tangent line L of the second curved surface 43 at the boundary P so as to have a linear cross section taken along the center axis of the socket 42. Alternatively, the tapered surface 44a may be formed along a tangent line at a position on the second curved surface 43 at the outer side of the boundary P in the radial direction of the cylinder.

In this way, it is possible to stabilize the contact position of the first curved surface 23 of the cylinder 22 with respect to the second curved surface 43 of the socket 42.

Here, a surface 44b at the inner side, in the radial direction of the cylinder, of the tapered surface 44a may be formed in a tapered shape continuously from the tapered surface 44a, or in a curved surface having a curvature substantially equal to that of the second curved surface 43.

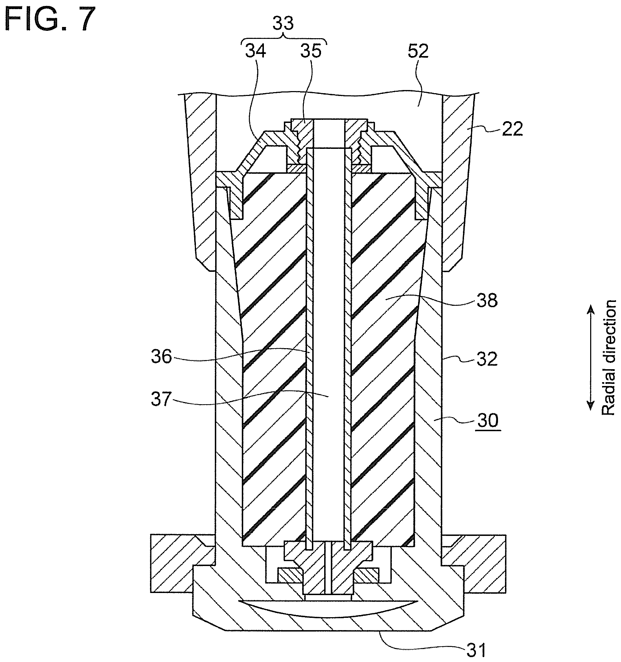

FIG. 7 is a cross sectional view of a configuration example of one of the pistons 30 according to one embodiment.

In one embodiment, the piston 30 includes a cylindrical portion 32 that has an opening on the outer side in the radial direction of the rotation shaft 11 (see FIG. 1), a lid portion 33 that closes the opening of the cylindrical portion 32, and a filler material 38 filling the interior space surrounded by the cylindrical portion 32 and the lid portion 33.

In a specific configuration example, the cylindrical portion 32 of the piston 30 includes a bottom portion on the inner side in the radial direction that contacts the cam surface 21 (see FIG. 2) and has a bottomed cylindrical shape with an opening on the outer side in the radial direction. The interior space of the cylindrical portion 32 is filled with the filler material 38. The specific gravity of the filler material 38 may be not less than 0.7 times and not more than 1.3 times the specific gravity of the working oil. For instance, resin is used as the filler material 38. An oil pipe 36 may be disposed in the interior space of the cylindrical portion 32 along the center axis of the piston 30. The oil pipe 36 has an opening to the working chamber 52 at one end, and an opening to the cam chamber 50 (see FIG. 2) at the other end. An oil channel 37 through which the working oil flows is formed inside the oil pipe 36. A part of the working oil in the working chamber 52 is introduced into a gap between the piston 30 and the cam surface 21 (see FIG. 2) of the cam chamber 50 through the oil channel 37 to act as lubricant oil, which makes it possible to improve the sliding performance of the piston 30 with respect to the cam surface 21. The opening of the cylindrical portion 32 is sealed by the lid portion 33. For instance, the lid portion 33 includes the first member 34 having an annular shape disposed so as to surround the oil pipe 36, and the second member 35 disposed at the center of the first member 34 and mounted to the oil pipe 36.

An example of an assembly method of the piston 30 illustrated in the drawing will be described.

First, from the opening of the cylindrical portion 32, the oil pipe 36 and the first member 34 of the lid portion 33 are mounted to the interior space of the cylindrical portion 32. Next, the filler material 38 in a liquid form is poured into the interior space of the cylindrical portion 32 through a gap between the first member 34 and the oil pipe 36, and then the second member 35 of the lid portion 33 is mounted to seal the interior space of the cylindrical portion 32. Here, the filler material 38 is solidified after being poured into the interior space of the cylindrical portion 32.

For instance, if the interior space of the piston 30 is hollow, unnecessary work would be caused when the piston 30 is pressed down toward a bottom dead center. Thus, as in the above configuration, with the interior space of the piston 30 being filled with the filler material 38, the capacity of the working chamber 52 becomes small as compared to a case in which the interior space of the piston 30 is hollow. In this way, it is possible to avoid unnecessary work when the piston 30 is pressed down toward the bottom dead center.

As illustrated in FIG. 2, in one embodiment, the hydraulic motor 8 includes a group of pistons which forms a piston row in the circumferential direction with a plurality of pistons 30 arranged in the circumferential direction. The plurality of pistons 30 belonging to the group of pistons is retained from outside in the radial direction by an annular retention ring (not illustrated) disposed around the cam surface 21. The retention ring (not illustrated) may include a pair of retention rings (not illustrated) disposed across the pistons 30 in the direction of the rotational axis. Further, each retention ring (not illustrated) may be configured to be dividable into two or more segments in the circumferential direction. Further, a spring or a spring washer is interposed between the retention ring (not illustrated) and the end portions 31 of the pistons 30 so as to bias the end portions 31 of the pistons 30 toward the cam surface 21.

With this configuration, it is possible to maintain the end portions 31 of the pistons 30 to be in contact with the cam surface 21 of the eccentric cam 20 even when the eccentric cam 20 rotates.

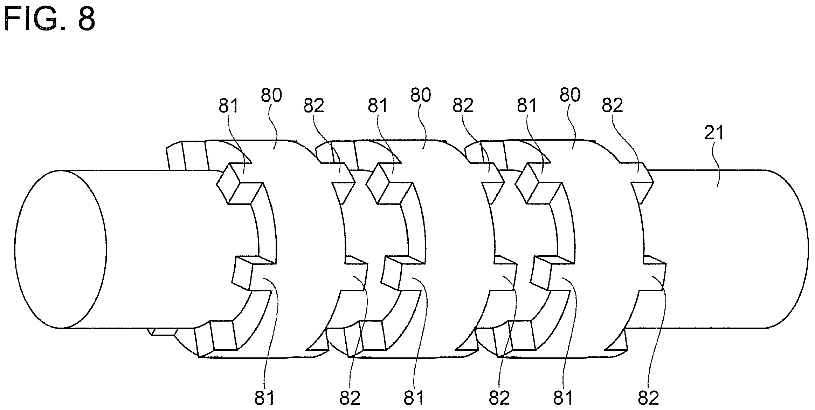

FIG. 8 is a schematic perspective view of elastic-member holders according to one embodiment.

As illustrated in FIGs. 2 and 8, in one embodiment, the plurality of cylinders 22 includes a group of cylinders arranged in the circumferential direction of the hydraulic motor 8 to form a cylinder row in the circumferential direction. The elastic member 60 (see FIGs. 3A and FIG. 3B) is provided for each of the cylinders 22 belonging to the cylinder group. An elastic-member holder 80 of an annular shape configured to hold a plurality of such elastic members 60 provided for the respective cylinders 22 is disposed around the cam surface 21. For instance, as illustrated in FIG. 8, the elastic-member holder 80 disposed around the cam surface 21 includes elastic-member holding portions 81, 82 that protrude in the direction of the rotational axis, so that the elastic members 60 are held by the elastic-member holding portions 81, 82. Although not illustrated, the cylinders 22 and the pistons 30 are disposed between the elastic-member holding portion 81 and the elastic-member holding portion 82 of adjacent two of the elastic-member holders 80.

With the above configuration, since the elastic-member holder 80 of an annular shape holds the plurality of elastic members 60, it is possible to reduce the number of components and to reduce the operation time in assembling.

The present invention is not limited the above embodiments, and various amendments and modifications may be implemented within a scope that does not depart from the present invention.

For instance, while the hydraulic machine according to the present embodiment is applied to the wind turbine generator 1 in the embodiment described above, the hydraulic machine according to the present embodiment is not limitedly applied to the wind turbine generator 1, and may be applied to other renewable-energy type power generating apparatuses, or other devices including a hydraulic machine. Specifically, in a case where the hydraulic machine according to the present embodiment is applied to other renewable energy power generating apparatuses, a renewable energy power generating apparatus according to one embodiment includes a rotor configured to be rotated by renewable energy (e.g. tidal current, ocean current, or river current), a hydraulic pump configured to be driven by the rotor, a hydraulic motor configured to be driven by pressurized oil produced by the hydraulic pump, and a generator configured to be driven by the hydraulic motor. In this renewable-energy type power generating apparatus, at least one of the hydraulic pump or the hydraulic motor includes the hydraulic machine described in the above embodiments.

For instance, an expression of an equal state such as "same" "equal" and "uniform" shall not be construed as indicating only the state in which the feature is strictly equal, but also includes a state in which there is a tolerance or a difference that can still achieve the same function.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A hydraulic machine (7, 8), comprising:
a rotation shaft (11);
a cam (20) configured to rotate with the rotation shaft (11);
a plurality of cylinders (22) disposed around the cam (20) each of which includes a distal end portion disposed on an outer side in a radial direction of the rotation shaft (11), a part of the distal end portion being formed by a first curved surface (23);
a plurality of pistons (30) disposed around the cam (20) so that end portions of the pistons (30) at an inner side in the radial direction contact a cam surface (21) of the cam (20), the plurality of pistons (30) each being configured to reciprocate in corresponding one of the plurality of cylinders (22) along a direction of a center axis of the cylinder (22) in accordance with rotation of the cam (20);
a stationary member (40) disposed on an outer side of the plurality of cylinders (22) in the radial direction, the stationary member (40) including sockets (42) having second curved surfaces (43) which are engageable with the first curved surfaces (23) of the distal end portions of the cylinders (22); and
a plurality of elastic members (60) for biasing the plurality of cylinders (22) outward in the radial direction so as to force the first curved surfaces (23) of the cylinders (22) against the second curved surfaces (43) of the sockets (42),
wherein the first curved surfaces (23) of the respective cylinders (22) engage with the second curved surfaces (43) of the sockets (42) so that rocking of each of the cylinders (22) is permitted at least in a plane perpendicular to a rotational axis of the rotation shaft (11),
wherein each of the plurality of elastic members (60) is provided for a corresponding one of the plurality of cylinders (22).

2. The hydraulic machine (7, 8) according to claim 1,
wherein the at least one elastic member (60) comprises a pair of elastic members disposed on opposite sides of each of the plurality of cylinders (22) in a direction of the rotational axis.

3. The hydraulic machine (7, 8) according to claim 1 or 2,
wherein each of the cylinders (22) includes a biasing-force receiving surface (25) disposed so as to face inward in the radial direction and configured to receive a biasing force of the at least one elastic member (60),
wherein the stationary member (40) includes a support surface (41) disposed on an inner side of the biasing-force receiving surface (25) in the radial direction so as to face the biasing-force receiving surface (25), and
wherein the hydraulic machine (7, 8) further comprises a rotation permitting portion (70, 72) for permitting rotation of the biasing-force receiving surface (25) with respect to the support surface (41) about an axis parallel to the rotational axis, the rotation permitting portion (70, 72) being disposed between the biasing-force receiving surface (25) of each of the cylinders (22) and the support surface (41) of the stationary member (40).

4. The hydraulic machine (7, 8) according to claim 3,
wherein the rotation permitting portion (70, 72) includes an engagement surface (71, 75) which is engageable with a concave groove disposed on at least one of the biasing-force receiving surface (25) or the support surface (41), and which has a curved cross section along a plane perpendicular to the rotational axis.

5. The hydraulic machine (7, 8) according to claim 3 or 4,
wherein the rotation permitting portion (70, 72) includes a ball (70) which is engageable with a concave groove disposed on at least one of the biasing-force receiving surface (25) or the support surface (41).

6. The hydraulic machine (7, 8) according to any one of claims 3 to 5,
wherein each of the cylinders (22) includes a protruding portion (24) disposed so as to protrude outward from an outer circumferential surface of the cylinder (22), the protruding portion (24) including the biasing-force receiving surface (25),
wherein the at least one elastic member (60) is a coil spring (60) disposed between the biasing-force receiving surface (25) of the protruding portion (24) and the support surface (41) of the stationary member (40),
wherein the hydraulic machine (7, 8) further comprises a pin (62) including a shaft portion (62a) inserted through the coil spring (60) and a flange portion (62b) for receiving a biasing force of the coil spring (60), and
wherein the rotation permitting portion (70, 72) includes a ball (70) which is engageable with a first concave groove formed on the biasing-force receiving surface (25) of the protruding portion (24) and a second concave groove (63) formed on a surface of the flange portion (62b) which is opposite to the coil spring (60).

7. The hydraulic machine (7, 8) according to any one of claims 3 to 5,
wherein each of the cylinders (22) includes a protruding portion (24) disposed so as to protrude outward from an outer circumferential surface of the cylinder (22), the protruding portion (24) including the biasing-force receiving surface (25),
wherein the at least one elastic member (60) is a coil spring (60) disposed between the biasing-force receiving surface (25) of the protruding portion (24) and the support surface (41) of the stationary member (40),
wherein the rotation permitting portion (70, 72) includes a shaft portion (73) inserted through the coil spring (60) and an engagement portion (74) disposed integrally with the shaft portion (73) on an end portion of the shaft portion (73) at an opposite side from the support surface (41), and
wherein the engagement portion (74) of the rotation permitting portion (70, 72) includes an engagement surface (75) which is engageable with a concave groove formed on the biasing-force receiving surface (25) of the protruding portion (24) and which has a curved cross section along a plane perpendicular to the rotational axis.

8. The hydraulic machine (7, 8) according to any one of claims 1 to 7,
wherein the second curved surface (43) of each of the sockets (42) has a curvature radius larger than that of the first curved surface (23) of each of the cylinders (22).

9. The hydraulic machine (7, 8) according to claim 8,
wherein each of the sockets (42) includes a tapered surface (44a) disposed on an inner side of corresponding one of the second curved surfaces (43) in a radial direction of corresponding one of the cylinders (22), and
wherein the tapered surface (44a) extends on a tangent line of the second curved surface (43) at a boundary between the second curved surface (43) and the tapered surface (44a), or in a region on a socket side of the tangent line.

10. The hydraulic machine (7, 8) according to any one of claims 1 to 9,
wherein each of the pistons (30) includes:
a cylindrical portion (32) including an opening disposed on an outer side in the radial direction;
a lid portion (33) which closes the opening of the cylindrical portion (32); and
a filling material which fills an interior space surrounded by the cylindrical portion (32) and the lid portion (33).

11. The hydraulic machine (7, 8) according to claim 10,
wherein a specific gravity of the filling material is not less than 0.7 times and not more than 1.3 times a specific gravity of working oil used in the hydraulic machine (7, 8).

12. The hydraulic machine (7, 8) according to any one of claims 1 to 11,
wherein the plurality of cylinders (22) includes a group of cylinders arranged in a circumferential direction of the hydraulic machine (7, 8) to form a cylinder row in the circumferential direction,
wherein the at least one elastic member (60) comprises a plurality of elastic members (60) corresponding to the respective cylinders (22) belonging to the group of cylinders, and
wherein the hydraulic machine (7, 8) further comprises an elastic-member holder (80) of an annular shape disposed around the cam surface (21) and configured to hold the plurality of elastic members (60).

13. The hydraulic machine (7, 8) according to any one of claims 1 to 12,
wherein the plurality of pistons (30) includes a group of pistons arranged in a circumferential direction of the hydraulic machine (7, 8) to form a piston row in the circumferential direction, and
wherein the hydraulic machine (7, 8) further comprises a retention ring disposed around the cam surface (21) and configured to engage with the plurality of pistons (30) belonging to the group of pistons so as to hold the pistons (30) from outside in the radial direction.

14. A renewable-energy type power generating apparatus (1), comprising:
a rotor (4) configured to be rotated by renewable energy;
a hydraulic pump (7) configured to be driven by the rotor;
a hydraulic motor (8) configured to be driven by pressurized oil produced by the hydraulic pump (7); and
a generator (10) configured to be driven by the hydraulic motor (8),
wherein at least one of the hydraulic pump (7) or the hydraulic motor (8) is the hydraulic machine (7, 8) according to any one of claims 1 to 13.

## Patentansprüche

1. Hydraulische Maschine (7, 8), umfassend:
eine Drehwelle (11),
eine Nockenwelle (20), die dafür ausgelegt ist, sich mit der Drehwelle (11) zu drehen,
mehrere Zylinder (22), die um die Nockenwelle (20) herum angeordnet sind, von denen jeder einen distalen Endabschnitt beinhaltet, der auf einer Außenseite in einer radialen Richtung der Drehwelle (11) angeordnet ist, wobei ein Teil des distalen Endabschnitts durch eine erste gekrümmte Fläche (23) gebildet wird,
mehrere Kolben (30), die so um die Nockenwelle (20) herum angeordnet sind, dass Endabschnitte der Kolben (30) an einer Innenseite in der radialen Richtung eine Nockenwellenfläche (21) der Nockenwelle (20) berühren, wobei die mehreren Kolben (30) jeweils dafür ausgelegt sind, sich in einem entsprechenden der mehreren Zylinder (22) entlang einer Richtung einer Mittelachse des Zylinders (22) entsprechend der Drehung der Nockenwelle (20) hin- und herzubewegen,
ein stationäres Element (40), das auf einer Außenseite der mehreren Zylinder (22) in der radialen Richtung angeordnet ist, wobei das stationäre Element (40) Fassungen (42) beinhaltet, die zweite gekrümmte Flächen (43) aufweisen, die mit den ersten gekrümmten Flächen (23) der distalen Endabschnitte des Zylinders (22) in Eingriff bringbar sind, und
mehrere elastische Elemente (60) zum Vorspannen der mehreren Zylinder (22) in der radialen Richtung nach außen, um die ersten gekrümmten Flächen (23) der Zylinder (22) gegen die zweiten gekrümmten Flächen (43) der Fassungen (42) zu drücken,
wobei die ersten gekrümmten Flächen (23) der jeweiligen Zylinder (22) die zweiten gekrümmten Flächen (43) der Fassungen (42) so in Eingriff nehmen, dass ein Wippen von jedem der Zylinder (22) zumindest in einer Ebene senkrecht zu der Drehachse der Drehwelle (11) zugelassen wird,
wobei jedes der mehreren elastischen Elemente (60) für einen entsprechenden der mehreren Zylinder (22) bereitgestellt ist.

2. Hydraulische Maschine (7, 8) nach Anspruch 1,
wobei das mindestens eine elastische Element (60) ein Paar elastische Elemente umfasst, die an entgegengesetzten Seiten von jedem der mehreren Zylinder (22) in einer Richtung der Drehachse angeordnet sind.

3. Hydraulische Maschine (7, 8) nach Anspruch 1 oder 2,
wobei jeder der Zylinder (22) eine Vorspannkraft-Aufnahmefläche (25) beinhaltet, die so angeordnet ist, dass sie in der radialen Richtung nach innen gewandt ist, und die dafür ausgelegt ist, eine Vorspannkraft des mindestens einen elastischen Elements (60) aufzunehmen,
wobei das stationäre Element (40) eine Stützfläche (41) beinhaltet, die so auf einer Innenseite der Vorspannkraft-Aufnahmefläche (25) in der radialen Richtung angeordnet ist, dass sie der Vorspannkraft-Aufnahmefläche (25) zugewandt ist, und
wobei die hydraulische Maschine (7, 8) ferner einen eine Drehung zulassenden Abschnitt (70, 72) zum Zulassen einer Drehung der Vorspannkraft-Aufnahmefläche (25) in Bezug auf die Stützfläche (41) um eine Achse parallel zu der Drehachse umfasst, wobei der eine Drehung zulassende Abschnitt (70, 72) zwischen der Vorspannkraft-Aufnahmefläche (25) von jedem der Zylinder (22) und der Stützfläche (41) des stationären Elements (40) angeordnet ist.

4. Hydraulische Maschine (7, 8) nach Anspruch 3,
wobei der eine Drehung zulassende Abschnitt (70, 72) eine Eingriffsfläche (71, 75) beinhaltet, die mit einer konkaven Nut, die auf mindestens einer von der Vorspannkraft-Aufnahmefläche (25) oder der Stützfläche (41) angeordnet ist, in Eingriff bringbar ist und einen gekrümmten Querschnitt entlang einer Ebene senkrecht zu der Drehachse aufweist.

5. Hydraulische Maschine (7, 8) nach Anspruch 3 oder 4,
wobei der eine Drehung zulassende Abschnitt (70, 72) eine Kugel (70) beinhaltet, die mit einer konkaven Nut, die auf mindestens einer von der Vorspannkraft-Aufnahmefläche (25) oder der Stützfläche (41) angeordnet ist, in Eingriff bringbar ist.

6. Hydraulische Maschine (7, 8) nach einem der Ansprüche 3 bis 5,
wobei jeder der Zylinder (22) einen hervorstehenden Abschnitt (24) beinhaltet, der so angeordnet ist, dass er von einer äußeren Umfangsfläche des Zylinders (22) nach außen hervorsteht, wobei der hervorstehende Abschnitt (24) die Vorspannkraft-Aufnahmefläche (25) beinhaltet,
wobei das mindestens eine elastische Element (60) eine Spiralfeder (60) ist, die zwischen der Vorspannkraft-Aufnahmefläche (25) des hervorstehenden Abschnitts (24) und der Stützfläche (41) des stationären Elements (40) angeordnet ist,
wobei die hydraulische Maschine (7, 8) ferner einen Stift (62) umfasst, der einen Wellenabschnitt (62a), der durch die Spiralfeder (60) eingeführt wird, und einen Flanschabschnitt (62b) zum Aufnehmen einer Vorspannkraft der Spiralfeder (60) beinhaltet, und
wobei der eine Drehung zulassende Abschnitt (70, 72) eine Kugel (70) beinhaltet, die mit einer ersten konkaven Nut, die auf der Vorspannkraft-Aufnahmefläche (25) des hervorstehenden Abschnitts (24) ausgebildet ist, und einer zweiten konkaven Nut (63), die auf einer der Spiralfeder (60) entgegengesetzten Fläche des Flanschabschnitts (62b) ausgebildet ist, in Eingriff bringbar ist.

7. Hydraulische Maschine (7, 8) nach einem der Ansprüche 3 bis 5,
wobei jeder der Zylinder (22) einen hervorstehenden Abschnitt (24) beinhaltet, der so angeordnet ist, dass er von einer äußeren Umfangsfläche des Zylinders (22) nach außen hervorsteht, wobei der hervorstehende Abschnitt (24) die Vorspannkraft-Aufnahmefläche (25) beinhaltet,
wobei das mindestens eine elastische Element (60) eine Spiralfeder (60) ist, die zwischen der Vorspannkraft-Aufnahmefläche (25) des hervorstehenden Abschnitts (24) und der Stützfläche (41) des stationären Elements (40) angeordnet ist,
wobei der eine Drehung zulassende Abschnitt (70, 72) einen Wellenabschnitt (73), der durch die Spiralfeder (60) eingeführt wird, und einen Eingriffsabschnitt (74), der auf einem Endabschnitt des Wellenabschnitts (73) auf einer entgegengesetzten Seite von der Stützfläche (41) einstückig mit dem Wellenabschnitt (73) angeordnet ist, und
wobei der Eingriffsabschnitt (74) des eine Drehung zulassenden Abschnitts (70, 72) eine Eingriffsfläche (75) beinhaltet, die mit einer konkaven Nut, die auf der Vorspannkraft-Aufnahmefläche (25) des hervorstehenden Abschnitts (24) ausgebildet ist, in Eingriff bringbar ist und einen gekrümmten Querschnitt entlang einer Ebene senkrecht zu der Drehachse aufweist.

8. Hydraulische Maschine (7, 8) nach einem der Ansprüche 1 bis 7,
wobei die zweite gekrümmte Fläche (43) von jeder der Fassungen (42) einen Wölbungsradius aufweist, der größer als der der ersten gekrümmten Fläche (23) von jedem der Zylinder (22) ist.

9. Hydraulische Maschine (7, 8) nach Anspruch 8,
wobei jede der Fassungen (42) eine sich verjüngende Fläche (44a) beinhaltet, die auf einer Innenseite einer entsprechenden einen der zweiten gekrümmten Flächen (43) in einer radialen Richtung zu einem entsprechenden der zweiten Zylinder (22) angeordnet ist, und
wobei sich die sich verjüngende Fläche (44a) auf einer Tangentenlinie der zweiten gekrümmten Fläche (43) an einer Grenze zwischen der zweiten gekrümmten Fläche (43) und der sich verjüngenden Fläche (44a), oder in einem Bereich auf einer Fassungsseite der Tangentenlinie erstreckt.

10. Hydraulische Maschine (7, 8) nach einem der Ansprüche 1 bis 9,
wobei jeder der Kolben (30) Folgendes beinhaltet:
einen zylindrischen Abstand (32), der eine Öffnung beinhaltet, die auf einer Außenseite in der radialen Richtung angeordnet ist,
einen Deckelabschnitt (33), der die Öffnung des zylindrischen Abschnitts (32) schließt, und
ein Füllmaterial, das einen von dem zylindrischen Abschnitt (32) und dem Deckelabschnitt (33) umschlossenen Innenraum füllt.

11. Hydraulische Maschine (7, 8) nach Anspruch 10,
wobei ein spezifisches Gewicht des Füllmaterials nicht geringer als das 0,7-Fache und nicht höher als das 1,3-Fache eines spezifischen Gewichts von Arbeitsöl ist, das in der hydraulischen Maschine (7, 8) verwendet wird.

12. Hydraulische Maschine (7, 8) nach einem der Ansprüche 1 bis 11,
wobei die mehreren Zylinder (22) eine Gruppe von Zylindern beinhalten, die in einer Umfangsrichtung der hydraulischen Maschine (7, 8) angeordnet sind, um eine Zylinderreihe in der Umfangsrichtung zu bilden,
wobei das mindestens eine elastische Element (60) mehrere elastische Elemente (60) umfasst, die den jeweiligen Zylindern (22) entsprechen, die zu der Gruppe von Zylindern gehören, und
wobei die hydraulische Maschine (7, 8) ferner eine Halterung (80) der elastischen Elemente mit einer ringförmigen Gestalt umfasst, die um die Nockenwellenfläche (21) angeordnet ist und konfiguriert ist, die mehreren elastischen Elemente (60) zu halten.

13. Hydraulische Maschine (7, 8) nach einem der Ansprüche 1 bis 12,
wobei die mehreren Kolben (30) eine Gruppe von Kolben beinhalten, die in einer Umfangsrichtung der hydraulischen Maschine (7, 8) angeordnet sind, um eine Kolbenreihe in der Umfangsrichtung zu bilden,
wobei die hydraulische Maschine (7, 8) ferner einen Haltering umfasst, der um die Nockenwellenfläche (21) angeordnet ist und konfiguriert ist, die mehreren Kolben (30), die zu der Gruppe von Kolben gehören, in Eingriff zu nehmen, um die Kolben (30) von außen in der radialen Richtung zu halten.

14. Vorrichtung zur Stromerzeugung aus erneuerbarer Energie (1), umfassend:
einen Rotor (4), der konfiguriert ist, durch erneuerbare Energie rotiert zu werden,
eine Hydraulikpumpe (7), die konfiguriert ist, durch den Rotor angetrieben zu werden,
einen Hydraulikmotor (8), der konfiguriert ist, durch Drucköl, das von der Hydraulikpumpe (7) erzeugt wird, angetrieben zu werden, und
einen Generator (10), der konfiguriert ist, durch den Hydraulikmotor (8) angetrieben zu werden,
wobei zumindest eines von der Hydraulikpumpe (7) oder dem Hydraulikmotor (8) die hydraulische Maschine (7, 8) nach einem der Ansprüche 1 bis 13 ist.

## Revendications

1. Machine hydraulique (7, 8) comprenant :
un arbre de rotation (11) ;
une came (20) configurée pour tourner avec l'arbre de rotation (11) ;
une pluralité de cylindres (22) disposés autour de la came (20), dont chacun comprend une partie d'extrémité distale disposée sur un côté externe dans une direction radiale de l'arbre de rotation (11), une partie de la partie d'extrémité distale étant formée par une première surface incurvée (23) ;
une pluralité de pistons (30) disposés autour de la came (20) de sorte que les parties d'extrémité des pistons (30) au niveau d'un côté interne dans la direction radiale sont en contact avec une surface de came (21) de la came (20), la pluralité de pistons (30) étant chacun configurés pour effectuer un mouvement de va-et-vient dans un cylindre correspondant de la pluralité de cylindres (22) le long d'une direction d'un axe central du cylindre (22) selon la rotation de la came (20) ;
un élément stationnaire (40) disposé sur un côté externe de la pluralité de cylindres (22) dans la direction radiale, l'élément stationnaire (40) comprenant des douilles (42) ayant des secondes surfaces incurvées (43) qui peuvent se mettre en prise avec les premières surfaces incurvées (23) des parties d'extrémité distales des cylindres (22) ; et
une pluralité d'éléments élastiques (60) pour solliciter la pluralité de cylindres (22) vers l'extérieur dans la direction radiale afin de forcer les premières surfaces incurvées (23) des cylindres (22) contre les secondes surfaces incurvées (43) des douilles (42),
dans laquelle les premières surfaces incurvées (23) des cylindres (22) respectifs se mettent en prise avec les secondes surfaces incurvées (43) des douilles (42) de sorte que le balancement de chacun des cylindres (22) est autorisé au moins dans un plan perpendiculaire à un axe de rotation de l'arbre de rotation (11),
dans laquelle chacun de la pluralité d'éléments élastiques (60) est prévu pour un cylindre correspondant de la pluralité de cylindres (22).

2. Machine hydraulique (7, 8) selon la revendication 1,
dans laquelle le au moins un élément élastique (60) comprend une paire d'éléments élastiques disposés sur les côtés opposés de chacun de la pluralité de cylindres (22) dans une direction de l'axe de rotation.

3. Machine hydraulique (7, 8) selon la revendication 1 ou 2,
dans laquelle chacun des cylindres (22) comprend une surface de réception de force de sollicitation (25) disposée afin d'être orientée vers l'intérieur dans la direction radiale et configurée pour recevoir une force de sollicitation du au moins un élément élastique (60),
dans laquelle l'élément stationnaire (40) comprend une surface de support (41) disposée sur un côté interne de la surface de réception de force de sollicitation (25) dans la direction radiale afin de faire face à la surface de réception de force de sollicitation (25), et
dans laquelle la machine hydraulique (7, 8) comprend en outre une partie d'autorisation de rotation (70, 72) pour permettre la rotation de la surface de réception de force de sollicitation (25) par rapport à la surface de support (41) autour d'un axe parallèle à l'axe de rotation, la partie d'autorisation de rotation (70, 72) étant disposée entre la surface de réception de force de sollicitation (25) de chacun des cylindres (22) et la surface de support (41) de l'élément stationnaire (40).

4. Machine hydraulique (7, 8) selon la revendication 3,
dans laquelle la partie d'autorisation de rotation (70, 72) comprend une surface de mise en prise (71, 75) qui peut se mettre en prise avec une rainure concave disposée sur au moins l'une parmi la surface de réception de force de sollicitation (25) ou la surface de support (41), et qui a une section transversale incurvée le long d'un plan perpendiculaire à l'axe de rotation.

5. Machine hydraulique (7, 8) selon la revendication 3 ou 4,
dans laquelle la partie d'autorisation de rotation (70, 72) comprend une bille (70) qui peut se mettre en prise avec une rainure concave disposée sur au moins l'une parmi la surface de réception de force de sollicitation (25) ou la surface de support (41).

6. Machine hydraulique (7, 8) selon l'une quelconque des revendications 3 à 5,
dans laquelle chacun des cylindres (22) comprend une partie en saillie (24) disposée afin de faire saillie vers l'extérieur à partir d'une surface circonférentielle externe du cylindre (22), la partie en saillie (24) comprenant une surface de réception de force de sollicitation (25),
dans laquelle le au moins un élément élastique (60) est un ressort hélicoïdal (60) disposé entre la surface de réception de force de sollicitation (25) de la partie en saillie (24) et la surface de support (41) de l'élément stationnaire (40),
dans laquelle la machine hydraulique (7, 8) comprend en outre une broche (62) comprenant une partie d'arbre (62a) insérée à travers le ressort hélicoïdal (60) et une partie de bride (62b) pour recevoir une force de sollicitation du ressort hélicoïdal (60), et
dans laquelle la partie d'autorisation de rotation (70, 72) comprend une bille (70) qui peut se mettre en prise avec une première rainure concave formée sur la surface de réception de force de sollicitation (25) de la partie en saillie (24) et une seconde rainure concave (63) formée sur une surface de la partie de bride (62b) qui est opposée au ressort hélicoïdal (60).

7. Machine hydraulique (7, 8) selon l'une quelconque des revendications 3 à 5,
dans laquelle chacun des cylindres (22) comprend une partie en saillie (24) disposée afin de faire saillie vers l'extérieur à partir d'une surface circonférentielle externe du cylindre (22), la partie en saillie (24) comprenant une surface de réception de force de sollicitation (25),
dans laquelle le au moins un élément élastique (60) est un ressort hélicoïdal (60) disposé entre la surface de réception de force de sollicitation (25) de la partie en saillie (24) et la surface de support (41) de l'élément stationnaire (40),
dans laquelle la partie d'autorisation de rotation (70, 72) comprend une partie d'arbre (73) insérée à travers le ressort hélicoïdal (60) et une partie de mise en prise (74) disposée de manière solidaire avec la partie d'arbre (73) sur une partie d'extrémité de la partie d'arbre (73) d'un côté opposé à la surface de support (41), et
dans laquelle la partie de mise en prise (74) de la partie d'autorisation de rotation (70, 72) comprend une surface de mise en prise (75) qui peut se mettre en prise avec une rainure concave formée sur la surface de réception de force de sollicitation (25) de la partie en saillie (24) et qui a une section transversale incurvée le long d'un plan perpendiculaire à l'axe de rotation.

8. Machine hydraulique (7, 8) selon l'une quelconque des revendications 1 à 7,
dans laquelle ladite seconde surface incurvée (43) de chacune des douilles (42) a un rayon de courbure supérieur à celui de la première surface incurvée (23) de chacun des cylindres (22).

9. Machine hydraulique (7, 8) selon la revendication 8,
dans laquelle chacune des douilles (42) comprend une surface progressivement rétrécie (44a) disposée sur un côté interne d'une surface correspondante des secondes surfaces incurvées (43) dans une direction radiale d'un cylindre correspondant des cylindres (22), et
dans laquelle la surface progressivement rétrécie (44a) s'étend sur une ligne tangente de la seconde surface incurvée (43) au niveau d'une limite entre la seconde surface incurvée (43) et la surface progressivement rétrécie (44a), ou dans une région d'un côté de la douille de la ligne tangente.

10. Machine hydraulique (7, 8) selon l'une quelconque des revendications 1 à 9,
dans laquelle chacun des pistons (30) comprend :
une partie cylindrique (32) comprenant une ouverture disposée sur un côté externe dans la direction radiale ;
une partie de couvercle (33) qui ferme l'ouverture de la partie cylindrique (32) ; et
une matière de remplissage qui remplit un espace intérieur entouré par la partie cylindrique (32) et la partie de couvercle (33).

11. Machine hydraulique (7, 8) selon la revendication 10,
dans laquelle un poids spécifique de la matière de remplissage n'est pas inférieur à 0,7 fois et n'est pas supérieur à 1,3 fois un poids spécifique d'huile de travail utilisée dans la machine hydraulique (7, 8).

12. Machine hydraulique (7, 8) selon l'une quelconque des revendications 1 à 11,
dans laquelle la pluralité de cylindres (22) comprend un groupe de cylindres agencés dans une direction circonférentielle de la machine hydraulique (7, 8) pour former une rangée de cylindres dans la direction circonférentielle,
dans laquelle le au moins un élément élastique (60) comprend une pluralité d'éléments élastiques (60) correspondant aux cylindres (22) respectifs appartenant au groupe de cylindres, et
dans laquelle la machine hydraulique (7, 8) comprend en outre un support d'élément élastique (80) de forme annulaire disposé autour de la surface de came (21) et configuré pour supporter la pluralité d'éléments élastiques (60).

13. Machine hydraulique (7, 8) selon l'une quelconque des revendications 1 à 12,
dans laquelle la pluralité de pistons (30) comprend un groupe de pistons agencé dans une direction circonférentielle de la machine hydraulique (7, 8) pour former une rangée de pistons dans la direction circonférentielle, et
dans laquelle la machine hydraulique (7, 8) comprend en outre une bague de retenue disposée autour de la surface de came (21) et configurée pour se mettre en prise avec la pluralité de pistons (30) appartenant au groupe de pistons afin de maintenir les pistons (30) à partir de l'extérieur, dans la direction radiale.

14. Appareil de génération d'électricité de type à énergie renouvelable (1) comprenant :
un rotor (4) configuré pour être entraîné en rotation par l'énergie renouvelable ;
une pompe hydraulique (7) configurée pour être entraînée par le rotor ;
un moteur hydraulique (8) configuré pour être entraîné par l'huile sous pression produite par la pompe hydraulique (7) ; et
un générateur (10) configuré pour être entraîné par le moteur hydraulique (8),
dans lequel au moins l'un parmi la pompe hydraulique (7) ou le moteur hydraulique (8) est la machine hydraulique (7, 8) selon l'une quelconque des revendications 1 à 13.
